# EUROPÄISCHE PATENTSCHRIFT

(11) **EP 0 924 887 B1**
(45) Veröffentlichungstag und Bekanntmachung des Hinweises auf die Patenterteilung: **24.05.2006**
(21) Anmeldenummer: 98120286.4
(22) Anmeldetag: 27.10.1998
(51) Int. Cl.: H04H 3/00

(54) **Verfahren zur Signalversorgung von Repeatern in Gleichwellensendernetzen**
Method for supplying input signals to repeaters in common wave transmitter networks
Méthode pour alimenter des répeteurs avec des signaux dans des réseaux d'émetteurs en onde commune

(30) Priorität: 17.12.1997 DE 19756050
(43) Veröffentlichungstag der Anmeldung: 23.06.1999
(73) Patentinhaber: Deutsche Telekom AG, 53113 Bonn (DE)
(72) Erfinder: Firner, Erwin Dipl.-Ing., 77656 Offenburg (DE)
(74) Vertreter: Deuschel, Wilhelm

(56) Entgegenhaltungen:
- EP-A- 0 040 731
- EP-A- 0 370 915
- CHOUINARD G: "NEW COVERAGE CONCEPTS FOR DIGITAL TERRESTRIAL TELEVISION BROADCASTING" BROADCAST SESSIONS. MONTREUX, JUNE 10 - 15, 1993, PROCEEDINGS OF THE INTERNATIONAL TELEVISION SYMPOSIUM AND TECHNICAL EXHIBITION, GENEVE, CCITT, CH, Bd. SYMP. 1993, 10. Juni 1993 (1993-06-10), Seiten 896-922, XP000385346

## Beschreibung

Die Erfindung betrifft ein Verfahren zur Signalversorgung von sogenannten Repeatern nach dem Oberbegriff des Patentanspruches 1, sowie eine zugehörige Einrichtung nach dem Patentanspruch 4.

Derartige Repeater haben die Aufgabe, innerhalb von Versorgungsbereichen von Rundfunksendern mit geländebedingten Funkschattengebieten eine ausreichende, lückenlose Funkversorgung sicherzustellen. Insofern entsprechen in digital betriebenen Gleichwellensendernetzen, z.B. in dem des zukünftigen DAB (Digital Audio Broad-casting) - Systems eingesetzte Repeater von ihrer Aufgabe her den bekannten, in analogen Fernsehsendernetzen verwendeten Füllsendern, die meist als sogenannte Fernsehumsetzer (TVU), das Signal eines Bezugssenders oder Muttersenders über eine Empfangsantenne aufnehmen und auf einer anderen Frequenz verstärkt wieder aussenden.

Eine ausführliche Beschreibung des unter ETS 300 401 standardisierten DAB - Systems ist z.B. einem Aufsatz von T. Wächter mit dem Titel "Das Übertragungsverfahren des zukünftigen digitalen Hörrundfunks" in der Zeitschrift "Der Fernmeldeingenieur", 1992, Heft 11 und 12, Seiten 4 bis 43 zu entnehmen.

In "New coverage concepts for Digital Terrsestrial Television Broadcasting", Gérald Chouinard, Communications Research Centre, Canada, pages 896 - 922 ist ein Verfahren zur Signalversorgung von Repeatern in Gleichwellensendernetzen mit mindestens einem Muttersender, der ein Sendesignal gemäß einem vorgegebenen Strahlungsdiagramm über eine Sendeantenne ausstrahlt, und einem oder mehreren Repeatern, die das vom Muttersender ausgesendetes Signal empfangen, verstärken und wieder aussenden, offenbart.

Aus der EP-A-040 731 ist ein verfahren und eine Anordnung zum zeitgleichen Aussenden von Nachrichten über mehrere Gleichwellensender bekannt. Hierbei werden die Nachrichten in den Gleichwellensendern gespeichert bzw. verzögert, bis die längstmögliche Laufzeit der Nachrichten von der Zentrale zu den Gleichwellensendern verstrichen ist; anschließend werden die Nachrichten auf ein Taktsignal hin, das für alle Gleichwellensender verbindlich, synchron von den Gleichwellensendern ausgestrahlt.

Während die genannten, in analogen Sendernetzen eingesetzten Füllsender grundsätzlich auf einer von der Frequenz des Bezugssenders (Muttersenders) verschiedenen Frequenz abstrahlen und ihre Strahlungsfelder das vom eigenen Empfänger aufzunehmende Feld des jeweiligen Muttersenders deshalb nicht beeinflussen, senden Repeater in einem digital betriebenen Gleichwellensendernetz exakt dasselbe Signal aus wie alle weiteren Sender und Repeater des Netzes. Eine Beeinflussung der eigenen Empfangsantenne durch das verstärkt wiederausgesendete Signal ist deshalb nicht ganz zu vermeiden. In der Praxis ist eine bessere Koppeldämpfung als 85 dB zwischen Sende- und Empfangsantenne eines Repeaters nicht zu erreichen. Dies zwingt zu einer Begrenzung der Verstärkung für die Repeater, die sich insbesondere dann nachteilig bemerkbar macht, wenn der Repeaterstandort weit entfernt vom Muttersender liegt oder in einen in dessen Strahlungsdiagramm ungünstig gelegenen Winkelbereich fällt, so dass das vom Repeater zu verstärkende Signal nur schwach empfangen wird und das verstärkte Signal dann nicht mit der gewünschten Leistung ausgestrahlt werden kann.

Der Erfindung liegt deshalb die Aufgabe zugrunde, eine Möglichkeit zu schaffen, Repeater in Gleichwellensendernetzen ebenso effektiv einsetzen zu können, wie dies in analogen Sendernetzen bei Abstrahlung einer von der Frequenz des Muttersenders verschiedenen Frequenz möglich ist. Dabei sollen die Repeater das Strahlungsfeld der Muttersender nicht merklich beeinflussen. Schließlich sollen die Kosten für einen Repeater im Vergleich zu einem Sender mit eigener Signalaufbereitung und entsprechender Leistung möglichst niedrig liegen.

Diese Aufgabe wird durch die Merkmale des im Patentanspruch 1 angegebenen Verfahrens gelöst. Eine Einrichtung zur Durchführung des Verfahrens gibt Patentanspruch 4 wieder.

Durch Verwendung von auf die einzelnen Repeater ausgerichteten Richtantennen zur Übertragung des auszusendenden Signals wird eine hohe Empfangsfeldstärke am Repeater sichergestellt und damit eine gute maximale Repeaterleistung ermöglicht. Da die so geschaffenen Richtfunkstrecken von der Form des Strahlungsdiagrammes des Muttersenders unabhängig sind, können auch Repeater in Winkelbereichen angeordnet und versorgt werden, in die die Abstrahlung des Muttersenders herabgesetzt oder aufgrund der Geometrie der Antennenanordnung am Sendemast des Muttersenders gestört ist. Auch lassen sich zusätzliche Repeater in ein bereits bestehendes Sendernetz einfügen, ohne dass Veränderungen an den übrigen Sendern oder deren Strahlungsdiagrammen vorgenommen werden müssen. Außerdem wird hier eine Maßnahme angegeben, die eine bessere Entkopplung zwischen Empfangsantenne und Sendeantenne des Repeaters ermöglicht und damit erlaubt, auch bei geringer Empfangsleistung über die Richtfunkstrecke die Strahlungsleistung des Repeaters auf höhere Werte einzustellen, wie ohne diese Maßnahme möglich wäre.

Weiterbildungen des Verfahrens nach der Erfindung sind in den Unteransprüchen 2 und 3 wiedergegeben.

Patentanspruch 2 gibt eine einfache Möglichkeit zur Versorgung der Richtantennen an. Die von der Richtfunkstrecke benötigte Leistung ist dabei so niedrig, dass sie die Strahlungsleistung des Muttersenders nicht wesentlich vermindert.

Um bei Versorgung mehrerer Richtantennen eine nennenswerte Schwächung des Muttersenders und den Einsatz vieler dämpfungsbehafteter Auskopplungseinrichtungen zu vermeiden, kann gemäß Patentanspruch 3 das Sendesignal über eine einzige Auskopplungseinrichtung ausgekoppelt und danach verstärkt und auf die einzelnen Richtantennen verteilt werden.

Die auf den Vorrichtungsanspruch 4 rückbezogenen Ansprüche 5 und 6 geben Weiterbildungen der in Patentanspruch 4 beschriebenen Einrichtungen wieder.

Ein Ausführungsbeispiel des Verfahrens nach der Erfindung wird nachfolgend anhand mehrerer Figuren ausführlich beschrieben:
Die Figuren zeigen im einzelnen:
   Fig. 1, 2a und 2b: Strahlungsdiagramme von im L - Band arbeitenden Sendern (DAB-Hauptsendem) eines Gleichwellensendernetzes.
   Fig 3 a und b : Antennenanordnungen am Muttersender (Bezugssender).
   Fig. 4 : Antennenanordnung am Repeater.

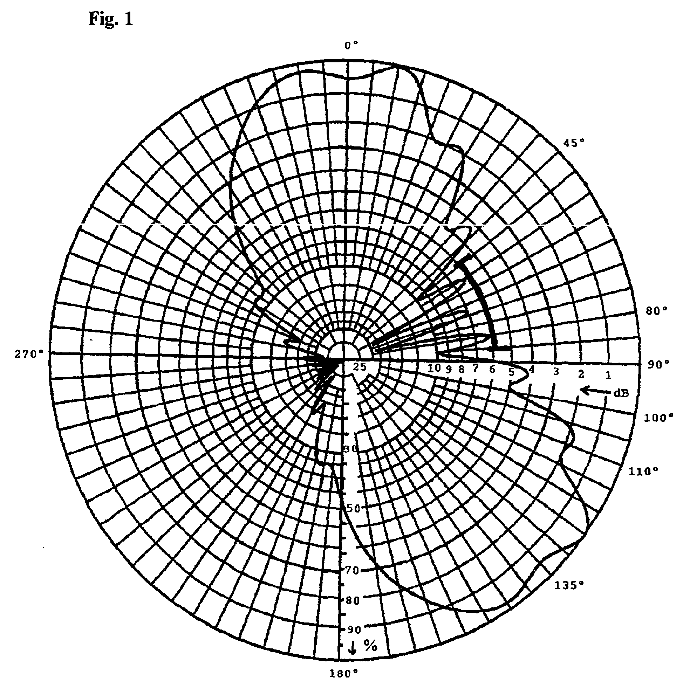

In Fig. 1 ist ein Strahlungsdiagramm eines im L-Band (1460 MHz) arbeitenden DAB - Hauptsenders mit zwei in 0° und 135 ° gerichteten Hauptstrahlungsfeldern mit je 65° Halbwertsbreite wiedergegeben. Die Keulenform der Strahlungsfelder und der Abstand der Felder voneinander, der auf den unvermeidbaren Abstand der Antennenstrahler voneinander zurückzuführen ist, bewirken hier Absenkungen der Strahlungsleistung in Winkelbereichen beiderseits der Hauptkeulen, die selbst auf der Seite, auf der die beiden Strahlungsfelder den kleineren Winkel zwischeneinander einschließen, beachtlich sind und hier im Winkelbereich zwischen 50° und 85° mehr als 6 dB betragen. Soll ein in diesem Winkelbereich gelegener Repeater von dem das in Figur 1 dargestellte Diagramm abstrahlenden Sender aus gespeist werden, so empfängt er ein im Vergleich zu einem im Hauptstrahlungsfeld zu empfangenden Signal sehr schwaches Signal und wird wegen der eingangs erwähnten, begrenzten maximalen Verstärkung nur eine geringe Leistung haben können.

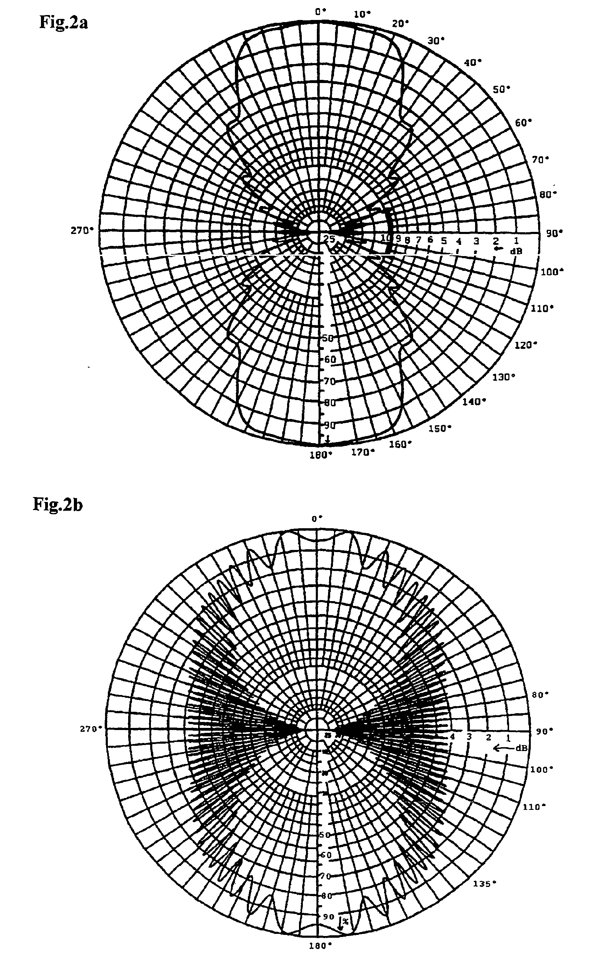

Noch deutlichere Feldstärkeabsenkungen (10 dB) sind in Fig. 2 a erkennbar, wo beide Strahlungsfelder einander genau entgegengerichtet sind. Selbst eine Erhöhung der Halbwertsbreite der beiden Felder auf 90° schafr keine grundsätzliche Abhilfe, wie das Strahlungsdiagramm in Fig 2 b zeigt. Hier treten in Winkelbereichen beiderseits der Strahlungsfelder Feldstärkeabsenkungen auf, die örtlich stark differieren und zwischen 4 dB und 20 dB betragen können.

Im Falle des in Fig 1 dargestellten Einzuges im Strahlungsdiagramm des Muttersenders von 6 dB in Richtung des Repeaters ergibt sich für eine Ausgangsleistung des Muttersenders von Pₒᵤₜ = 50 dBm, einer Kabeldämpfung der Antennenzuleitung von aₖ = 3 dB und einem Antennengewinn von a_{Ant} = 13 dB eine maximale Strahlungsleistung von ERP = 60 dBm (= 1 kW). Ist die Strahlungsleistung in Richtung des Repeaters um 6 dB herabgesetzt, so beträgt sie hier nur noch 54 dBm. Die vom Repeater empfangene Leistung p_{E} ist nun noch abhängig von der Freiraumdämpfung a₀ = 20 lg (4πd/*λ*)*,* in die neben der Wellenlänge λ des Sendesignals die Entfernung d des Repeaters vom Muttersender eingeht, und vom Gewinn a_{E} der Repeater-Empfangsantenne, für den 14 dB einen in der Praxis erreichbaren Wert darstellt. Mit diesen Werten beträgt die vom Repeater empfangene Leistung an einem Standort in 5 km Entfernung vom Muttersender: p_{E} = - 42 dBm, in 10 km Entfernung vom Muttersender: p_{E} = - 48 dBm und in 20 km Entfernung vom Muttersender: p_{E} = - 54 dBm.

Mit einer Verstärkung des Repeatersenders von v = 75 dB und einem Gewinn der Sendeantenne des Repeaters von aₛ = 14 dB ergeben sich als Strahlungsleistungen des Repeaters für die o.g. Standorte: ERP₅ = 47 dBm, ERP₁₀ = 41 dBm und ERP₂₀ = 35 dBm.

Diese bei herkömmlicher Signalversorgung der Repeater erreichbaren Leistungen genügen in aller Regel nicht, um eine ausreichende Versorgung von Funkschattengebieten, die nicht gerade in unmittelbarer Nähe des Repeaters liegen, sicherzustellen.

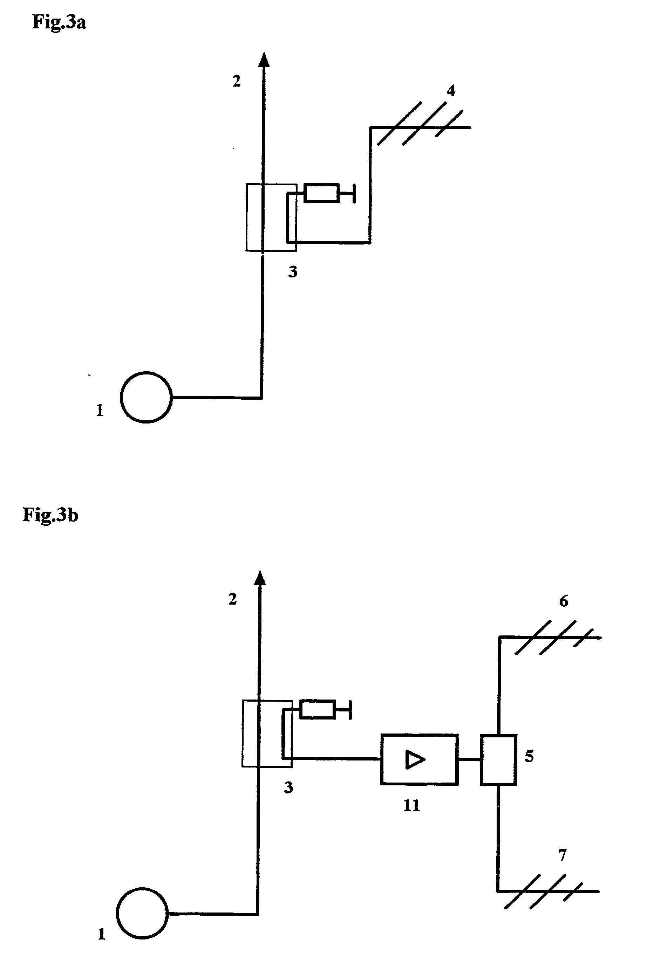

Fig. 3a zeigt schematisch eine Antennenanordnung am Muttersender 1, mit der es gemäß dem Verfahren nach der Erfindung möglich ist, einen Repeater auch dann mit ausreichender Leistung zu versorgen, wenn dieser in einem extrem ungünstigen Winkelbereich des Strahlungsdiagrammes dieses ihn versorgenden Muttersenders und gegebenenfalls auch noch weit von diesem entfernt liegt.

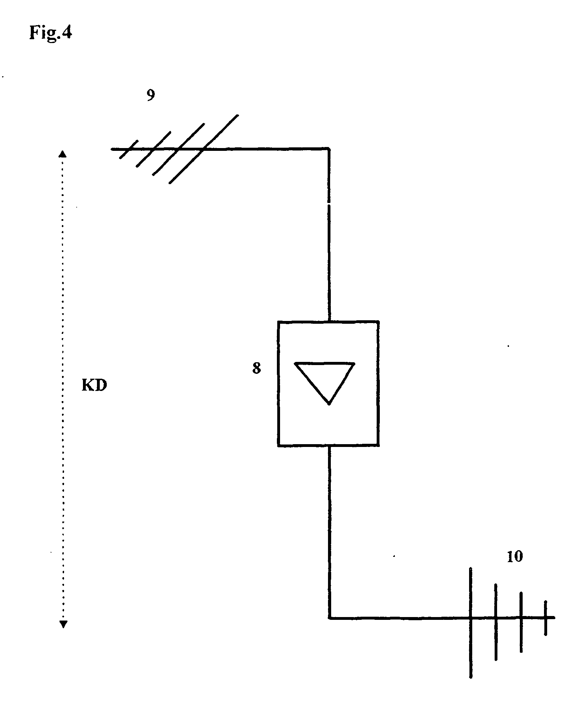

In der Zuleitung zur Antenne 2 des Muttersenders 1 ist ein Koppler 3 angeordnet, der einen kleinen Teil der Senderleistung auskoppelt und über eine besondere, scharf bündelnde Richtantenne 4 in Richtung des Repeaters strahlt. Der Repeater erhält dadurch mehr Empfangsleistung ohne daß die Strahlungsleistung des Muttersenders nennenswert geschwächt wird. Die Sendeleistung des Repeaters kann um denselben Faktor angehoben werden, um den die Empfangsleistung am Repeater durch die Richtfunkstrecke zwischen Muttersender und Repeater erhöht werden kann. Zusätzlich kann, wie in Fig 3a ebenfalls zu erkennen ist, durch eine entsprechende (horizontale) Ausrichtung der Richtantenne 4 sowie der Empfangsantenne (9 in Fig. 4) des Repeaters die Polarisation des in Richtung zum Repeater abgestrahlten und von diesem empfangenen HF- Feldes um 90° gedrent werden, so daß es orthogonal zu den von der Antenne 2 des Muttersenders und der Sendeantenne (10 in Fig. 4) des Repeaters abgestrahlten Feldern polarisiert ist. Letzteres bewirkt eine weitgehende Entkopplung zwischen Sendeseite und Empfangsseite des Repeaters und erlaubt die Einstellung eines wesentlich höheren Verstärkungsfaktors des Repeaterverstärkers (8 in Fig. 4).

Um eine merkliche Dämpfung des Ausgangskreises des Muttersenders zu vermeiden, kann, insbesondere wenn mehrere Repeater von einem Muttersender aus zu versorgen sind, wie dies in Fig. 3b wiedergegeben ist, nur ein einziger Koppler 3 für alle abgehenden Richtfunkstrecken vorgesehen sein. Dem Koppler ist dann ein Verstärker 4 nachgeschaltet, der die ausgekoppelte Leistung auf einen Wert verstärkt, der zur Versorgung aller Richtantennen 6, 7 ausreicht. Die Aufteilung der Leistung auf die einzelnen Richtantennen erfolgt durch einen dem Verstärker 4 nachgeschalteten Leistungsteiler 5.

Fig. 4 zeigt schematisch die Anordnung am Repeater. Das über die Empfangsantenne 9 empfangene Signal wird in einem Verstärker (Repeaterverstärker 8) verstärkt und über die Repeater-Sendeantenne 10 in Richtung auf das zu versorgende Gebiet ausgestrahlt. Nachdem die Empfangsantenne auf den Muttersender ausgerichtet ist und aufgrund der Bündelung des vom Muttersender her eingestrahlten Feldes ein starkes Empfangssignal aufnimmt, kann der Verstärkungsfaktor des Repeaterverstärkers so niedrig gehalten werden, daß von der Sendeantenne aufgrund einer endlichen Koppeldämpfung KD zwischen Sende- und Empfangsantenne übergekoppelte Signalanteile sich nicht auf die Qualität des zu verstärkenden Signals auswirken.

Wird, wie in der Figur angedeutet, die Empfangsantenne 9 horizontal und damit orthogonal zu dem über die Sendeantenne 10 abgestrahlten Feld ausgerichtet - was selbstverständlich eine entsprechend polarisierte Abstrahlung am Muttersender voraussetzt -, so wird die Koppeldämpfung zwischen Sende- und Empfangsantenne so groß, daß die Gefahr einer Rückwirkung des Sendekreises auf den Empfangskreis nahezu immer ausgeschlossen werden kann.

Für den in Fig 1 dargestellten Fall ergibt sich bei Anwendung des erfindungsgemäßen Verfahrens z.B. bei einer Ausgangsleistung des Muttersenders von 50 dBm, einem Wert, der ohne eine Energieauskoppelung aus dem Antennenkreis, wie oben bereits festgestellt, zu einer maximalen Strahlungsleistung des Muttersenders von ERP = 60 dBm führen würde, jetzt infolge geringfügiger Auskoppelverluste eine um etwa 1,25 dB niedrigere Strahlungsleistung. Diese kann jedoch, sollte dies erforderlich sein, leicht durch eine entsprechende Leistungsanpassung des Muttersenders ausgeglichen werden. Mit einerAuskoppeldämpfung von 6 dB, einer Kabeldämpfung von 3 dB und einem Antennengewinn der zum Repeater strahlenden Richtantenne von 19 dB ergibt sich eine effektive Strahlungsleistung zum Repeater von 60 dBm und damit am Repeater unter Zugrundelegung der Freiraumdämpfung und des Gewinns der Empfangsantenne des Repeaters von 14 dB eine Empfangsleistung von p_{E} = - 36 dBm für einen Standort in 5 km, p_{E} = - 42 dBm für einen Standort in 10 km und p_{E} = - 48 dBm für einen Standort in 20 km Entfernung vom Muttersender.

Allein durch den Einsatz separater Richtantennen zur Versorgung von Repeatern ergibt sich somit für den in Fig. 1 dargestellten Fall eine Verbesserung der Repeater - Empfangsleistung um 6 dB, die sich in voller Höhe auf die erzielbare maximale Strahlungsleistung des Repeaters auswirkt. In den in Fig. 2 a und 2 b dargestellten Fällen ist die Verbesserung wegen des stärkeren Diagrammeinzuges noch deutlicher.

Wird das zum Repeater gerichtete HF - Feld zusätzlich vertikal polarisiert abgestrahlt und die Empfangsantenne des Repeaters entsprechend orientiert, so kann mit Entkopplungswerten zwischen Sende- und Empfangsantenne des Repeaters gerechnet werden, die um 3 bis 6 dB höher liegen als dies bei gleicher Polarisation von zu empfangendem Feld und auszusendendem Feld der Fall ist. Damit ist eine weitere Erhöhung der Strahlungsleistung des jeweiligen Repeaters um einen entsprechenden Wert möglich.

## Patentansprüche

1. Verfahren zur Signalversorgung von Repeatern in Gleichwellensendernetzen mit mindestens einem Muttersender (1), der ein Sendesignal gemäß einem vorgegebenen Strahlungsdiagramm über eine oder mehrere Sendeantennen (2) ausstrahlt, und einem oder mehreren Repeatern, die das vom Muttersender ausgesendete Signal empfangen, verstärken und wieder aussenden, **dadurch gekennzeichnet, dass** das vom Muttersender erzeugte Sendesignal zusätzlich einer oder mehreren Richtantennen (4,6,7) zugeführt und von dort mit hohem Gewinn in Richtung jeweils eines Repeaters abgestrahlt wird und dass die Polarisationsrichtung des über eine Richtantenne in Richtung eines Repeaters abgestrahlten Feldes dabei orthogonal zur Polarisationsrichtung des vom Muttersender über seine Sendeantenne ausgestrahlten Feldes und des vom Repeater ausgestrahlten Feldes ist.

2. Verfahren nach Patentanspruch 1, **dadurch gekennzeichnet, dass** zur Versorgung der Richtantennen (4,6,7) ein kleiner Teil der vom Muttersender erzeugten Sendeleistung aus dessen Ausgangskreis ausgekoppelt wird.

3. Verfahren nach Patentanspruch 2, **dadurch gekennzeichnet, dass** zur Versorgung mehrerer Richtantennen (6,7), das aus dem Ausgangskreis des Muttersenders ausgekoppelte Sendesignal zwischenverstärkt und anschließend auf die Richtantenne verteilt wird.

4. Einrichtung zur Durchführung des Verfahrens nach Patentanspruch 1, **dadurch gekennzeichnet, dass** am Ort des Muttersenders (1) neben einer oder mehreren Sendeantennen (2) eine oder mehrere Richtantennen (4,6,7) vorgesehen sind, welche das Sendesignal des Muttersenders in Richtung auf jeweils eine am Ort eines Repeaters befindliche, auf den Muttersender hin ausgerichtete Empfangsantenne (9) abstrahlen und dass die Richtantennen und die an den Repeaterstandorten befindlichen Empfangsantennen so orientiert sind, dass das von ihnen ausgestrahlte oder empfangene HF- Feld orthogonal zu den vom Muttersender und den Repeatern abgestrahlten Feldern polarisiert ist.

5. Einrichtung nach Anspruch 4, **dadurch gekennzeichnet, dass** zur Signalversorgung der Richtantennen jeweils ein Koppler (3) in den Antennenkreis des Muttersenders geschaltet ist, dessen Auskoppelzweig mit einer zu versorgenden Richtantenne (4) verbunden ist.

6. Einrichtung nach einem der Patentansprüche 4 oder 5, **dadurch gekennzeichnet, dass** zur Versorgung mehrerer Richtantennen (6,7) am Ort eines Muttersenders ein Koppler (3) in den Antennenkreis des Muttersenders geschaltet ist, dessen Auskoppelzweig auf einen Verstärker (11) mit nachgeschalteten Leistungsteiler (5) geführt ist, und dass die einzelnen Richtantennen (6,7) mit Ausgängen des Leistungsteilers verbunden sind.

## Claims

1. Method for supplying signals to repeaters in continuous-wave transmitter networks with at least one master transmitter (1) to radiate a transmit signal through one or more transmit antennas (2) in accordance with a predefined radiated field pattern, and with one or more repeaters to receive, amplify and retransmit the transmitted signal from the master transmitter, **characterized in that** the transmit signal generated by the master transmitter is additionally fed to one or more directional antennas (4, 6, 7) whence it is radiated with high gain toward one repeater in each case, and **in that** the polarization direction of the field radiated through each directional antenna toward each repeater is orthogonal to the polarization direction of the field radiated by the master transmitter through its transmit antenna and to the field radiated by the repeater.

2. Method according to claim 1, **characterized in that** a small portion of the transmit power generated by the master transmitter is coupled out of its output circuit to supply the directional antennas (4, 6, 7).

3. Method according to claim 2, **characterized in that**, in order to supply multiple directional antennas (6, 7), the transmit signal coupled out of the output circuit of the master transmitter is amplified and subsequently distributed to the directional antenna.

4. Device for carrying out the method according to claim 1, **characterized in that** one or more directional antennas (4, 6, 7) are provided in addition to one or more transmit antennas (2) at the location of the master transmitter (1), each of said directional antennas radiating the transmit signal of the master transmitter toward a receive antenna (9) present at the location of a repeater and directed toward the master transmitter, and **in that** the directional antennas and the receive antennas present at the repeater locations are oriented such that the HF field they radiate or receive is polarized orthogonal to the fields transmitted by the master transmitter and the repeaters.

5. Device according to claim 4, **characterized in that** couplers (3) are wired into the antenna circuit of the master transmitter, each of said couplers supplying signals to one of the directional antennas and having its output coupling path connected to one of the directional antennas (4) to be supplied.

6. Device according to any one of claims 4 or 5, **characterized in that**, in order to supply multiple directional antennas (6, 7) at the location of a master transmitter, a coupler (3) is wired into the antenna circuit of the master transmitter, the output coupling path of said coupler (3) being connected to an amplifier (11) followed by a power divider (5), and **in that** the individual directional antennas (6, 7) are connected to outputs of the power divider.

## Revendications

1. Procédé destiné à fournir des signaux à des répéteurs dans des réseaux monofréquences comprenant au moins un émetteur maître (1) diffusant un signal d'émission via une ou plusieurs antennes émettrices (2) selon un diagramme de rayonnement prédéfini ainsi qu'un ou plusieurs répéteurs recevant, amplifiant et rediffusant le signal émis par l'émetteur maître,
**caractérisé en ce que**
le signal d'émission produit par l'émetteur maître est en outre envoyé à une ou plusieurs antennes directives (4, 6, 7) d'où il est rediffusé à haut gain en direction de chaque répéteur, et que le sens de polarisation du champ diffusé via une antenne directive en direction d'un répéteur est orthogonal au sens de polarisation du champ diffusé par l'émetteur maître via son antenne émettrice et du champ diffusé par le répéteur.

2. Procédé selon la revendication 1, **caractérisé en ce que**
pour alimenter les antennes directives (4, 6, 7), une petite partie de la puissance d'émission produite par l'émetteur maître est découplée de son circuit de sortie.

3. Procédé selon la revendication 2, **caractérisé en ce que**
pour alimenter plusieurs antennes directives (6, 7), le signal d'émission découplé du circuit de sortie de l'émetteur maître est soumis à une amplification intermédiaire puis distribué sur l'antenne directive.

4. Dispositif permettant la réalisation du procédé selon la revendication 1,
**caractérisé en ce que**
sont prévues à l'endroit de l'émetteur maître (1), en plus d'une ou plusieurs antennes émettrices (2), une ou plusieurs antennes directives (4, 6, 7) qui rediffusent chacune le signal d'émission de l'émetteur maître en direction d'une antenne réceptrice (9) située à l'endroit d'un répéteur et dirigée vers l'émetteur maître, et les antennes directives et les antennes réceptrices se trouvant à l'emplacement des répéteurs sont orientées de telle manière que le champ RF émis ou reçu par elles soit polarisé orthogonalement aux champs émis par l'émetteur maître et par les répéteurs.

5. Dispositif selon la revendication 4, **caractérisé en ce que**
pour alimenter les antennes directives en signaux, un coupleur (3) est branché respectivement sur le circuit d'antenne de l'émetteur maître, sa branche de découplage étant reliée à une antenne directive (4) à alimenter.

6. Dispositif selon l'une des revendications 4 ou 5, **caractérisé en ce que** pour alimenter plusieurs antennes directives (6, 7), à l'endroit de l'émetteur maître, un coupleur (3) est branché sur le circuit d'antenne de l'émetteur maître, sa branche de découplage étant appliquée à un amplificateur (11) à répartiteur de puissance (5) placé en aval et les différentes antennes directives (6, 7) sont reliées à des sorties du répartiteur de puissance.
